# EUROPEAN PATENT SPECIFICATION

(11) **EP 3 840 352 B1**
(45) Date of publication and mention of the grant of the patent: **17.11.2021**
(21) Application number: 19217006.6
(22) Date of filing: 17.12.2019
(51) Int. Cl.: H04N 5/225

(54) **METHOD OF ATTACHING A LIGHT SOURCE OR SENSOR BOARD ARRANGEMENT TO A BASE UNIT, AND A THUS FORMED ASSEMBLY**
VERFAHREN ZUR BEFESTIGUNG EINER LICHTQUELLE ODER EINER SENSORPLATTENANORDNUNG AN EINER BASISEINHEIT UND DADURCH GEFORMTE ANORDNUNG
PROCÉDÉ DE FIXATION D'UNE SOURCE DE LUMIÈRE OU D'UN AGENCEMENT DE CARTE DE CAPTEUR SUR UNE UNITÉ DE BASE ET ENSEMBLE AINSI FORMÉ

(43) Date of publication of application: 23.06.2021
(73) Proprietor: Axis AB, 223 69 Lund (SE)
(72) Inventor: Pinna, Claudia, 223 69 Lund (SE); Elfström, Tjomas, 223 69 Lund (SE); Beets, Sofia, 223 69 Lund (SE); Areskog, John, 223 69 Lund (SE); Qvarnström, Oden, 223 69 Lund (SE)
(74) Representative: AWA Sweden AB

(56) References cited:
- EP-A1- 1 246 456
- EP-A2- 2 373 001
- US-A1- 2007 159 703
- US-A1- 2017 261 719

## Description

### Field of invention

The invention relates to a method of attaching a light source or sensor board arrangement to a base unit. The invention also relates to an assembly comprising a light source or sensor board arrangement attached to a base unit in accordance with such a method.

The invention is especially applicable to a method of attaching a sensor board to an optics unit. The invention is also especially applicable for the provision of an assembly comprising a sensor board attached to an optics unit in accordance with such a method.

### Technical Background

When attaching a sensor board to an optics unit there is often a need for precise adjustment of the relative position between the sensor board and the optics unit, so that an image sensor of the sensor board becomes aligned with the optics, such as lenses, in the optics unit. Such adjustment may be performed by so called active alignment where the sensor board is first assembled to the optics unit such that the parts may still be moved relative to each other. Thereafter, when a desired position of the sensor board relative to the optics unit has been reached by the adjustment or active alignment, the sensor board is fixed to the optics unit such that the sensor board no longer may move relative to the optics unit.

To provide a guiding and an initial positioning, the optics unit may be provided with a plurality of protruding pins and the sensor board may be provided with a plurality of through-going holes, wherein each through-going hole is configured to receive a respective one of the protruding pins.

According to one method of attaching the sensor board to the optics unit, there is made use of an UV-curable adhesive, also known as light curable adhesive or glue. The UV-curable adhesive is applied to an interface between the sensor board and the optics unit. Before being cured, the UV-curable adhesive allows for a relative movement between the sensor board and the optics unit. When a desired position of the sensor board relative to the optics unit has been reached by the adjustment or active alignment, the UV-curable adhesive is subjected to UV-light and thereby cures. Thereby, the sensor board becomes fixed to the optics unit such that the sensor board no longer may move relative to the optics unit. However, a problem encountered with this method is to keep the adhesive in place during the alignment process.

This problem related to keeping the adhesive in place may e.g. be addressed by a precise selection of the viscosity of the adhesive in relation to the time to complete the actions of assembling the sensor board to the optics unit, perform the active alignment and the curing. However, such a method is not robust in the sense that the adhesive will not be kept in place if any of the steps takes longer time than expected or if the actual viscosity of the adhesive deviates from the intended viscosity.

The above problem related to keeping the adhesive in place may e.g. be addressed by applying a tape to a side of the sensor board facing away from the optic unit such that the tape covers a respective mouth of the through-going holes in the sensor board. Thereby the inner envelope surface of the through-going holes and the tape forms a cup with its interior facing and configured to receive the pin. The curable adhesive is applied in the thus formed cup such that, after curing of the curable adhesive, the pin is attached to the sensor board at the interior envelope surface of the through-going holes. However, this method is associated with a problem that it is difficult to apply the exact amount of adhesive to fill, but not overfill, the void formed between the interior surface of the through-going holes and the protruding pin inserted into the through-going hole. Overfilling of adhesive in the cups will result in that some adhesive will be pushed out of the thus formed cup. Such adhesive being pushed out of the thus formed cup tend to end up in places between the sensor board and optics unit that are shadowed, whereby it will not be properly cured. Not properly cured curable adhesive may move and end up in places where it may damage the electronics. Moreover, not properly cured curable adhesive may react with the cured adhesive and over time reduce the strength of the cured adhesive. Thus, not cured adhesive is often not acceptable and to address there may be required additional or alternative processing, such as an alternative or additional hardening in a heat oven or UV oven, with additional efforts and costs associated thereto. Moreover, with this approach the protruding pins are limited to extend within the material thickness of the sensor board.

To address the issues related to the filling the desired amount of adhesive into the cup and to the limitation concerning the extension of the pin, it has been suggested to use specific cups formed of a polymer material. The cups are positioned in the through-going holes in the sensor board. The cups have a depth being greater than the thickness of the sensor board. Thereby the pins may have an extension being greater than the thickness of the sensor board. The bottom of the cups may be arranged such that it is positioned at a distance from the free end of the protruding pins. A result of this is that this approach becomes less sensitive to providing accurate amount of adhesive. However, this approach is more complicated and costlier since it involves the provision of additional parts that need to be manufactured and installed in the through-going holes. With this approach there is also a need to secure that the cups of polymer material are securely attached to the sensor board such that there is no movement between the sensor board and the cups.

Thus, there is still a need to address the problem of keeping the adhesive in place during the alignment process.

The concept should preferably allow a design freedom when it comes to the design of the protruding pins in relation to the sensor board. The concept should preferably be robust when it comes to the amount of adhesive being provided. The concept should preferably make efficient use of the available surfaces to provide a strong connection. The concept should preferably be material efficient and cost-efficient. The concept should preferably be easy to incorporate in existing assembly lines.

### Summary of invention

It is an object of the invention to provide a method of attaching a sensor board to an optics unit addressing at least some of the design criteria that the concept should preferably allow a design freedom when it comes to the design of the protruding pins in relation to the sensor board, that the concept should preferably be robust when it comes to the amount of adhesive being provided, that the concept should preferably make efficient use of the available surfaces to provide a strong connection, that the concept should preferably be material efficient and cost-efficient and that the concept should preferably be easy to incorporate in existing assembly lines.

This object has been achieved by a method as disclosed in the following. In this context it may be noted that it has also been realized that the method may be applicable also for other similar cases sometimes occurring when assembling different kinds of cameras. Such similar case may e.g. be the attachment and alignment of a light source, such as a laser, to a base unit, and/or the attachment of a sensor board, such as a sensor board with a laser sensor, to a base unit. It may also be noted that the light source board or the sensor board may be attached to a support board or intermediate board which in turn is attached to the base unit.

The above mentioned object and the additional considerations have been addressed in accordance with a method of attaching a light source or sensor board arrangement to a base unit, wherein the base unit is provided with a protruding structure and the light source or sensor board arrangement is provided with a through-going hole, wherein the through-going hole is configured to receive the protruding structure, wherein the method comprises:
providing a piece of a flexible sheet on a first side of the light source or sensor board arrangement configured to face the base unit when the light source or sensor board arrangement is attached to the base unit, such that the piece of flexible sheet extends across a mouth of the through-going hole, wherein the piece of flexible sheet is provided with cuts or perforations dividing a part of the piece of flexible sheet extending across the mouth into flaps, and wherein the cuts include a central cut-out,
applying a curable liquid adhesive from a second side of the light source or sensor board arrangement, the second side being opposite to the first side and being configured to face away from the base unit when the light source or sensor board arrangement is attached to the base unit, and into the through-going hole,
moving the light source or sensor board arrangement relative to the base unit such that the protruding structure of the base unit is inserted along a first direction through the part of the piece of flexible sheet extending across the mouth and into the through-going hole such that free ends of the flaps are pushed by the protruding structure in the first direction into the through-going hole,
aligning the light source or sensor board arrangement relative to the base unit, and
curing the curable liquid adhesive.

The light source or sensor board arrangement may e.g. be sensor board, such as a printed circuit board, to which an image sensor is attached. In accordance with one preferred embodiment the sensor board is provided with the through-going hole and is attached to the base unit. In accordance with an alternative embodiment, the sensor board is fixedly attached to an intermediate board, wherein the intermediate board is provided with the through-going hole and is attached to the base unit. The base unit is preferably an optics unit.

The light source or sensor board arrangement may be a board supporting a light source, such as a laser. The light source or sensor board arrangement may be a board supporting a light sensor, such as a laser sensor. As mentioned above, the board supporting the light source and/or the board supporting the light sensor may be provided with the through-going hole and be attached to the base unit or be attached to the base unit via an intermediate board, wherein the intermediate board is provided with the through-going hole and is attached to the base unit.

In the following, advantages will for clarity reason mainly be discussed in relation to an embodiment in which the light source or sensor board arrangement is a sensor board. However, it should be noted that the advantages are equally applicable to other similar embodiments, such as the ones mentioned above and also other similar embodiments that are apparent from the claims as such and from the description below.

The method does not require that the protruding structures have any specific extension relative to the thickness of the sensor board. The protruding structures may e.g. extend completely through the sensor board. This is preferred since it then is made easy to make full use of the thickness of the sensor board to accomplish a strong connection between the protruding structures and the sensor board. However, the concept still works if the protruding structures extends only partly through the thickness of the sensor board or if the protruding structures extends exactly or close to exactly through the thickness of the sensor board. Thus, the concept allows a design freedom when it comes to the design of the protruding structure in relation to the sensor board. It may also be noted that the method allows for a flexibility also when it comes to the cross-sectional shape of the protruding structure. In a sense it may be said that the protruding structure extends from the base unit along the first direction. Cross-sectional shape may refer to the shape as seen in a plane with a normal parallel to the first direction. The cross-sectional shape of the protruding structure may in this plane e.g. be circular such that the protruding structure forms circular pins as is shown in the enclosed drawings. However, it may be noted that the cross-sectional shape may be different from this. The protruding structure may e.g. have a cross-section being shaped as a triangle, a quadrate, an oval, an ellipse, a cross, etc., thus forming a pin of cross-sectional shapes being different from a circular cross-section. It may also be noted that the protruding structure may have a more elongate shape along the surface from which it protrudes. Thus, the protruding structure may e.g. be shaped as an elongated ridge. The protruding structure may e.g. be formed of two continuous, or intermittently shaped, ridges provided at a distance from each other and being configured to interact with a respective through-going hole provided on respective side of the sensor or light source.

It may be noted that after the action of moving the light source or sensor board arrangement relative to the base unit such that the protruding structure of the base unit is inserted along a first direction through the part of the piece of flexible sheet extending across the mouth and into the through-going hole such that free ends of the flaps are pushed by the protruding structure in the first direction into the through-going hole, the light source or sensor board arrangement is still movable relative to the base unit, such that alignment, such as an active alignment, of the light source or sensor board arrangement relative to the base unit may be performed. This is typically accomplished by the through-going holes having a cross-sectional dimension being larger than the corresponding cross-sectional dimension of the protruding structures. The cross-sectional dimension is preferably measured along a plane of the light source or sensor board arrangement. The cross-sectional dimension may e.g. be the diameters of circular through-going holes and circular protruding structures, such as pins.

Since the adhesive is applied from the second side and since the piece of a flexible sheet extending across the mouth the through-going hole on the first side forms a cup with a bottom on the first side, the concept is robust when it comes to the amount of adhesive being provided. The cup may be filled with adhesive. As the protruding structure is inserted along the first direction, the adhesive will fill the space still available between the outwardly facing envelope surface of the protruding structure and the inwardly facing envelope surface of the through-going hole. Any additional adhesive will partly or fully cover a portion of the protruding structure protruding above the second side of the sensor board or will end up around a mouth on the second side of the through-going hole. In any case the adhesive inside the thus formed cup and the adhesive on the protruding structure and/or on the mouth on the second side of the through-going hole is accessible such that it may be cured, such as being exposed to light from the second side.

Since the protruding structure may be allowed to extend fully through the sensor board, it is made possible to make efficient use of the available surfaces to provide a strong connection. Since the only additional material is a piece of a flexible sheet on a first side of the sensor board, the concept is material efficient and cost-efficient. Moreover, since the only additional material is a piece of a flexible sheet on a first side of the sensor board the concept is easy to incorporate in existing assembly lines.

It may be noted that the order of the actions need not necessarily be performed one after the other in the exact order as they are presented. The order of the actions may be different and/or some of the actions may be performed simultaneously, or at least partly overlapping in time.

It may be noted that although it is not necessary, it is preferred that the action of applying a curable liquid adhesive from a second side is at least initiated and preferably finalized before the action of moving the light source or sensor board arrangement relative to the base unit such that the protruding structure of the base unit is inserted along a first direction through the part of the piece of flexible sheet extending across the mouth and into the through-going hole such that free ends of the flaps are pushed by the protruding structure in the first direction into the through-going hole. This order of these actions facilitates the action of applying the curable liquid adhesive since it may be performed to the sensor board as such. This order of these actions is also advantageous in that the action of moving and the resulting insertion of the protruding structure facilitates an even distribution of the curable liquid adhesive in the space still available between the outwardly facing envelope surface of the protruding structure and the inwardly facing envelope surface of the through-going hole.

It may be noted that the liquid adhesive should have a sufficiently high viscosity such that it does not with ease flow through the cuts in the piece of flexible sheet extending across the mouth of the through-going hole. Thereby, the liquid adhesive will not immediately flow through the cuts in the piece of flexible sheet extending across the mouth of the through-going hole. Thereby, there is provided a time period in which the liquid adhesive will remain in the cup formed by the through-going hole and the piece of flexible sheet extending across the mouth of the through-going hole. The viscosity is chosen such that the time period is sufficiently long for the light source or sensor board arrangement and the base unit to be moved relative to each other such that the protruding structure is inserted in to the through-going hole. The time period is preferably in the order of seconds. However, it should still have a viscosity sufficiently low to allow it to conform with the space formed between the outer envelope surface of the protruding structure and the inner envelope surface of the through-going hole. Preferably, the liquid adhesive has a viscosity such that it is capable of flowing but with a viscosity greater than water. Preferably, the liquid adhesive has this viscosity in room temperatures.

The central cut-out may e.g. be a circular cut-out. The provision of a central cut-out makes it possible to define the radial extension of the flaps which in turn makes it possible to define to what extent the flaps extend along the protruding structure into the through-going hole. A larger cross-sectional dimension of the central cut-out, such as a larger diameter in case of a circular central cut-out, provides shorter radial extension of the flaps which in turn provides a shorter co-extension of the flaps with the protruding structure into the through-going hole. However, it may be noted that the central cut-out preferably has a cross-sectional dimension being smaller than the corresponding cross-sectional of the protruding structure such that the flaps will be pushed inwardly into the through-going hole a distance from the mouth in the first direction.

The cuts may include a plurality of cuts having an at least partly radial extension. It may in this context be noted that having an at least partly radial extension may relate to the fact that each cut may have an extension formed of one portion having a radial extension and one portion having an extension deviating from a radial extension. Having an at least partly radial extension may also relate to the fact that each cut or portion of a cut may have an extension along a direction having at least a component, preferably a major component, along the radial direction. The preferred feature that the cuts may include a plurality of cuts having an at least partly radial extension may be said to relate to the cuts defining flaps extending radially inwardly from an outer circumference.

A radial extension of the flaps may be related to a thickness of the light source or sensor board arrangement such that, as the protruding structure of the base unit is inserted into the through-going hole and the free ends of the flaps are pushed by the protruding structure in the first direction into the through-going hole, the free ends of the flaps remain within the through-going hole as seen along the thickness of the light source or sensor board arrangement. Thereby the flaps are protected such that they do not accidentally get caught in something when the base unit, with the light source or sensor board arrangement attached thereto, is handled.

The radial extension of the flaps is preferably related to the thickness of the light source or sensor board arrangement such that, as the protruding structure of the base unit is inserted into the through-going hole and the free ends of the flaps are pushed by the protruding structure in the first direction into the through-going hole, a sub-portion of a portion of an outer envelope surface of the protruding structure residing inside the through-going hole is left exposed such that the sub-portion may be adhesively connected directly to a corresponding, oppositely arranged portion of an inner envelope surface of the through-going hole. Thereby, it is secured that the radially inwardly facing ends of the flaps are securely hidden inside the through-going holes and it is made possible to provide a strong connection between the protruding structure and the through-going hole.

The sub-portion of the outer envelope surface constitutes preferably at least 25% of the portion of the outer envelope surface of the protruding structure residing inside the through-going hole. The at least 25% of the portion is preferably measured as a distance along the first direction. For a light source or sensor board arrangement having a uniform thickness around the through-going hole, the portion will have an extension along the first direction being equal to the thickness of the light source or sensor board arrangement and a sub-portion constituting e.g. 25% will thereby have an extension along the first direction being 25% of the thickness of the light source or sensor board arrangement.

It may be noted that the corresponding, oppositely arranged portion of the inner envelope surface of the through-going hole may be said to extend from a mouth of the through-going hole at the second side a distance into the through-going hole along a second direction being opposite to the first direction.

The piece of flexible sheet may have an adhesive side configured to face the first side of the light source or sensor board arrangement. This is a convenient way of attaching the piece of flexible sheet to the light source or sensor board arrangement. The adhesive side is preferably strong enough to carry the weight of the flexible sheet as such and preferably also strong enough to carry the weight of the curable liquid adhesive.

The piece of flexible sheet may have a non-adhesive side configured to face away from the light source or sensor board arrangement. This makes handling and attachment of the flexible sheet to the light source or sensor board arrangement easier. Moreover, unintentionally picking up of dirt is counteracted. This latter is especially advantageous in case the sensor and the flexible sheet is attached to the same side of the light source or sensor board arrangement. This is e.g. typically the case if the first side of the light source or sensor board arrangement is configured to face an optics unit, since in such a case, the image sensor is typically arranged on the first side of the light source or sensor board arrangement.

The flexible sheet may have a bending resistance such that the flaps are capable of carrying their own weight and thereby extend across the mouth of the through-going opening until the protruding structure of the base unit is inserted into the through-going hole. The bending resistance is preferably such that the flaps are also capable of carrying the weight of the curable liquid adhesive applied in the cup formed by the through-going hole and the flexible sheet extending across the mouth of the through-going hole.

The protruding structure protrudes a distance, as seen along the first direction, from the base unit, and wherein the light source or sensor board arrangement has around the through-going opening a material thickness, wherein the distance is preferably larger than the material thickness such that the protruding structure extends completely through the through-going hole, and more preferably extends a distance past the second side of the light source or sensor board arrangement. This makes efficient use of the available material thickness of the light source or sensor board arrangement. This is especially advantageous for cases when the material thickness of the light source or sensor board arrangement is relatively thin, such as in the order of 1mm. The curable liquid adhesive may in a sense be said to form an inverted cup on the part of the protruding structure extending a distance past the second side and attach this part extending past the second side to the second side immediately around the mouth of the through-going hole on the second side.

The curable adhesive is preferably light curable, more preferably UV-light curable. A light curable adhesive is advantageous since it may be cured by a physical principle which typically has non or at least a minimal impact on the components being attached to each other. That the adhesive preferably is curable specifically by UV-light is advantageous in the same way as a light curable adhesive but even more advantageous since it may be cured quickly and in an even more specific curing process by applying a greater proportion of UV-light from a specific UV-light source.

The method may further include exposing the curable liquid adhesive to light, preferably UV-light, from the second side. By exposing the curable liquid adhesive to light, preferably UV-light, from the second side, the risk of shadowed areas appearing is minimized.

The action of providing a piece of a flexible sheet on a first side of the light source or sensor board arrangement configured to face the base unit may include providing a plurality of pieces of the flexible sheet each covering one or more mouths of a plurality of through-going holes, and preferably includes providing a plurality of pieces of the flexible sheet with each piece covering the mouth of a respective through-going hole.

The base unit may be an optics unit. An optics unit typically includes a housing and a set of lenses inside the housing.

The object of the invention may also be said to be achieved by an assembly comprising a light source or sensor board arrangement attached to a base unit in accordance with a method as discussed above and as explained in more detail below.

The assembly may comprise a sensor board attached to an optics unit in accordance with a method as discussed above and as explained in more detail below.

A further example relates to a method of attaching a light source or sensor board arrangement to a base unit, wherein the base unit is provided with a protruding structure and the light source or sensor board arrangement is provided with a through-going hole, wherein the method comprises: providing a piece of a flexible sheet on a first side of the light source or sensor board arrangement across a mouth of the through-going hole, the piece of flexible sheet being provided with cuts or perforations dividing a part of the piece of flexible sheet extending across the mouth into flaps; applying a curable liquid adhesive from a second side; moving the light source or sensor board arrangement relative to the base unit such that the protruding structure is inserted into the through-going hole along a first direction through the part of the piece of flexible sheet such that free ends of the flaps are pushed in the first direction into the through-going hole; aligning the light source or sensor board arrangement relative to the base unit; and curing the curable liquid adhesive, and to an assembly comprising a light source or sensor board arrangement attached to a base unit in accordance with this method. The preferred embodiments discussed above are equally applicable to this method.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief description of the drawings

The invention will by way of example be described in more detail with reference to the appended schematic drawings, which show presently preferred embodiments of the invention.
Figure 1 discloses a plurality of pieces of flexible sheet configured to be attached to a sensor board, which sensor board in turn is configured to be attached to an optics unit such that pins protruding from the optics unit are inserted in through-going holes in the sensor board.
Figure 2 discloses the components of figure 1 in an assembled form.
Figures 3a-b disclose in detail a piece of flexible sheet of figure 1.
Figures 4a-d disclose various steps of how a piece of flexible sheet is attached over a mouth of a through-going hole, how liquid adhesive is applied, how the pin is inserted into the through-going hole, and how the liquid adhesive is cured.
Figure 5 is a schematic diagram of a method of attaching a light source or sensor board arrangement to a base unit.
Figure 6 discloses an embodiment in which the light source or sensor board arrangement includes an intermediate board.
Figure 7 discloses an embodiment where the method has been used for attaching a light source board to a base unit, a sensor board to a base unit and a sensor board to a base unit forming an optics unit.

### Detailed description of preferred embodiments

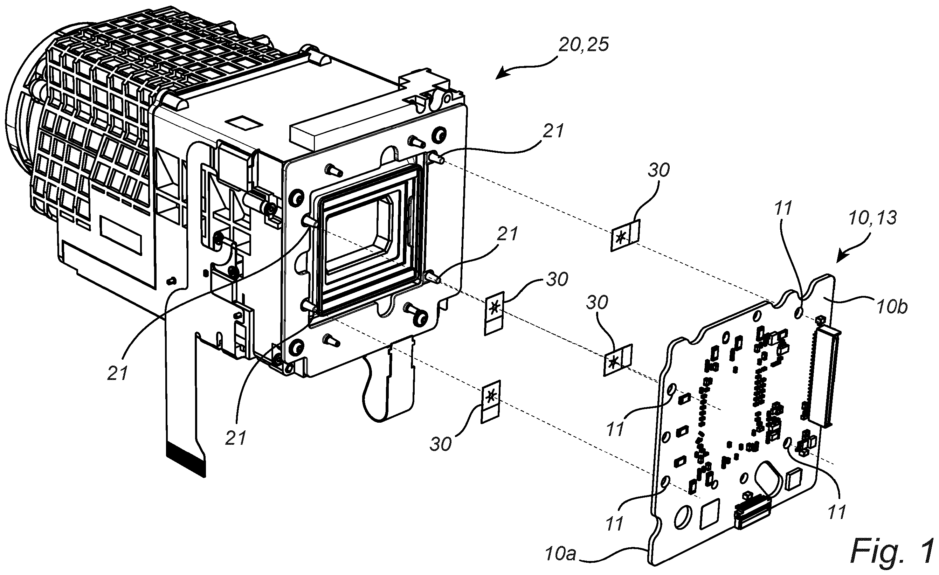

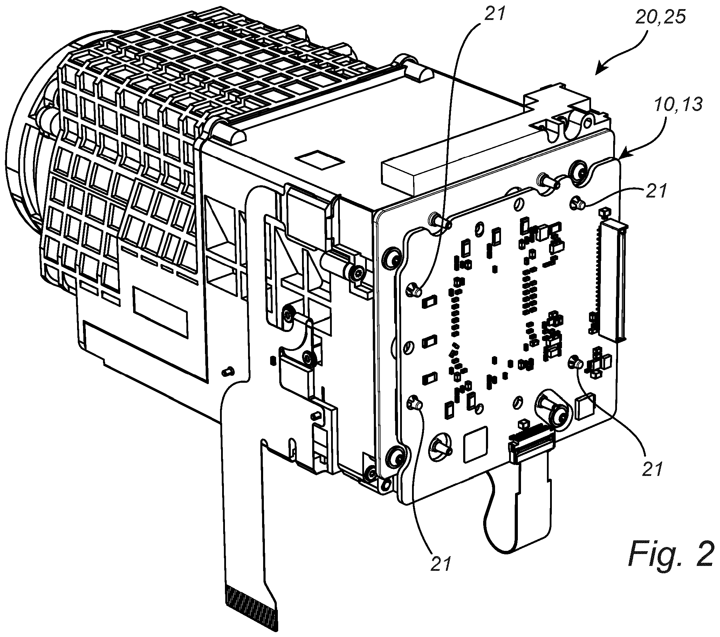

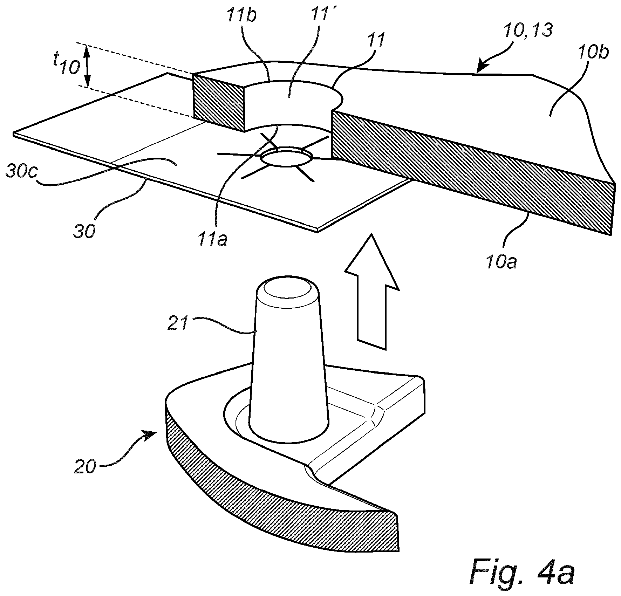

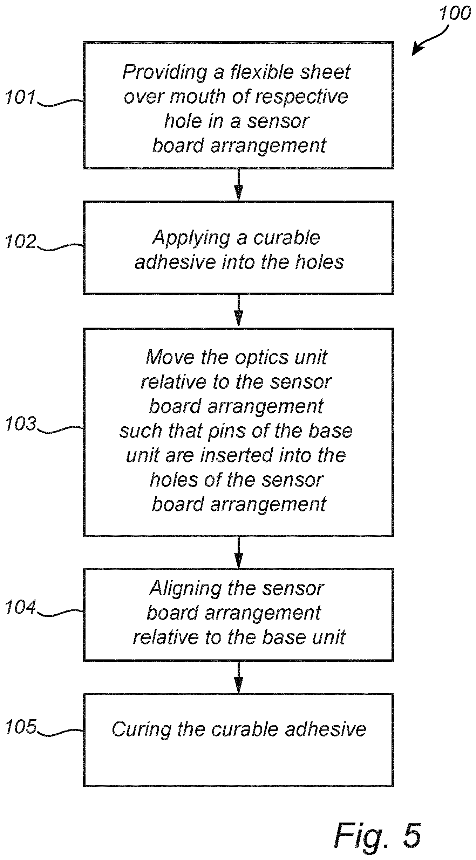

As shown in figures 1 and 2, as discussed briefly in the diagram of figure 5, and as shown in more details in figures 4a-d, when a sensor board 13 is attached to an optics unit 25 there is often a need for precise adjustment of the relative position between the sensor board 13 and the optics unit 25, so that an image sensor of the sensor board 13 becomes aligned with the optics, such as lenses, in the optics unit 25. Such adjustment may be performed by so called active alignment where the sensor board 13 is first assembled to the optics unit 25 such that the parts 13, 25 may still be moved relative to each other. Thereafter, when a desired position of the sensor board 13 relative to the optics unit 25 has been reached by the adjustment or active alignment, the sensor board 13 is fixed to the optics unit 25 such that the sensor board 13 no longer may move relative to the optics unit 25.

To provide a guiding and an initial positioning, the optics unit 25 may be provided with a plurality of protruding pins 21 and the sensor board 13 may be provided with a plurality of through-going holes 11, wherein each through-going hole 11 is configured to receive a respective one of the protruding pins 21. Allowing the parts 13, 25 to be moved relative to each other also after the senor board 13 is first assembled to the optics unit 25 is typically accomplished by the through-going holes 11 having a cross-sectional dimension, such as the diameter, being larger than the corresponding cross-sectional dimension, such as the diameter, of the protruding pins 21.

According to a preferred method of attaching the sensor board 13 to the optics unit 25, there is made use of light curable, preferably a UV-curable adhesive 40. The UV-curable adhesive 40 is applied to an interface between the sensor board and the optics unit. Before being cured, the UV-curable adhesive 40 allows for a relative movement between the sensor board 13 and the optics unit 25. When a desired position of the sensor board 13 relative to the optics unit 25 has been reached by the adjustment or active alignment, the UV-curable adhesive 40 is subjected to UV-light 50 and thereby cured. Thereby, the sensor board 13 becomes fixed to the optics unit 25 such that the sensor board 13 no longer may move relative to the optics unit 25.

As indicated in figure 5, a method 100 of attaching a light source or sensor board arrangement 10 to a base unit 2, may in short be said to include the actions of:
providing 101 a flexible sheet 30 over a mouth 11a of respective hole 11 in a sensor board arrangement 10, 13,
applying 102 a curable adhesive 40 into the holes 11,
moving 103 the optics unit 25 relative to the sensor board arrangement 10, 13 such that pins 21 of the base unit 20 are inserted into the holes 11 of the sensor board arrangement 10, 13,
aligning 104 the sensor board arrangement 10, 13 relative to the base unit 2, and
curing 105 the curable adhesive 40.

In the below, the method and the components will be discussed in more detail.

As mentioned above, the method may be applicable for attaching a light source or sensor board arrangement 10 to a base unit 20.

As shown in figure 1, the base unit 20 is provided with a protruding structure 21 and the light source or sensor board arrangement 10 is provided with a through-going hole 11, wherein the through-going hole 11 is configured to receive the protruding structure 21. In most embodiments, the base unit 20 is provided with a plurality of protruding structures 21 and the light source or sensor board arrangement 10 is provided with through-going holes 11, wherein the through-going holes 11 are each configured to receive an associated protruding structure 21.

As indicated in figure 1 and shown in more detail in figure 4a, a piece of a flexible sheet 30 is provided on a first side 10a of the light source or sensor board arrangement 10. The first side 10a is configured to face the base unit 20 when the light source or sensor board arrangement 10 is attached to the base unit 20. The piece of flexible sheet 30 is positioned such that the piece of flexible sheet 30 extends across a mouth 11a of the through-going hole 11.

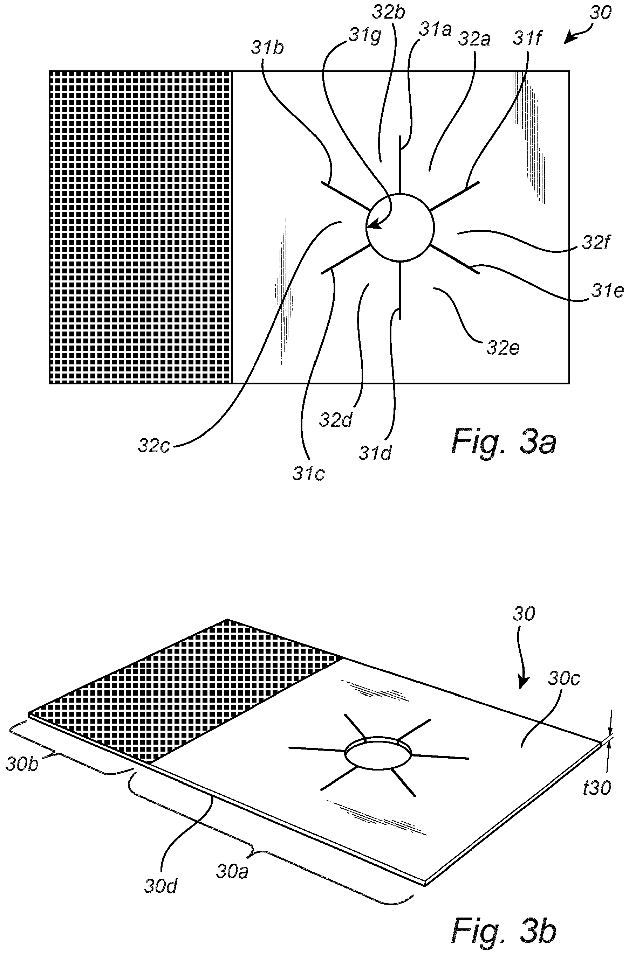

As shown in figure 4a and in more detail in figures 3a-b, the piece of flexible sheet 30 is provided with cuts or perforations 31a-g dividing a part 30a of the piece of flexible sheet 30 extending across the mouth 10a into flaps 32a-f.

As best shown in figure 3a, the cuts 31 a-g may include a plurality of cuts 31a-f having a radial extension. The plurality of radially extending cuts 31 a-f define a plurality of flaps 32a-f extending radially inwardly from an outer circumference where they are connected to the remaining parts of the flexible sheet 30. The cuts 31 a-g may include a central cut-out 31g. The central cut-out 31g may e.g. be a circular cut-out.

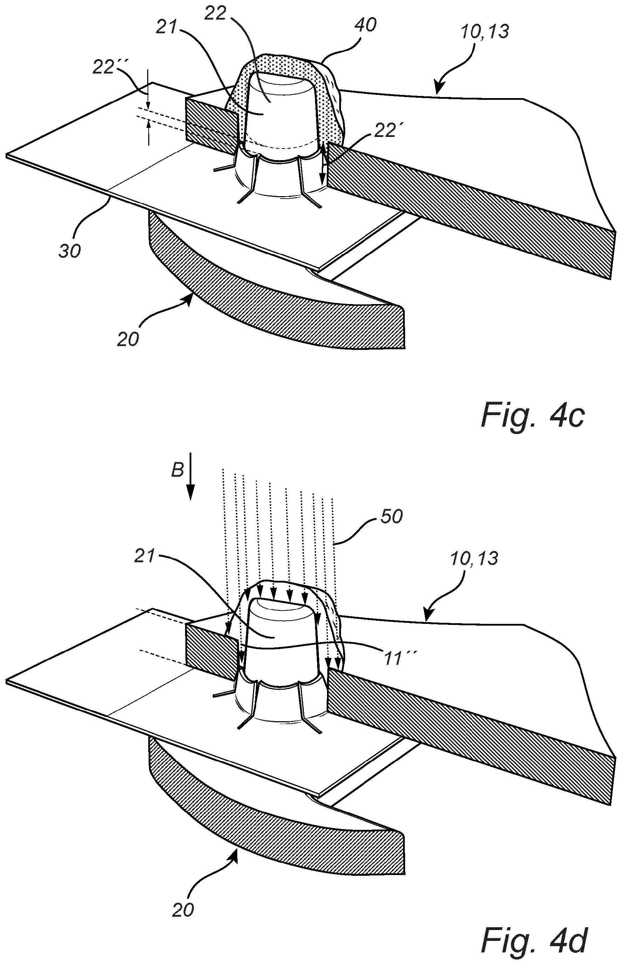

As may be seen in figure 4c, the provision of a central cut-out 31g makes it possible to define the radial extension of the flaps 32a-f which in turn makes it possible to define to what extent the flaps extend along the protruding structure 21 into the through-going hole 11. A larger cross-sectional dimension of the central cut-out 31g, such as a larger diameter in case of a circular central cut-out 31g, provides shorter radial extension of the flaps 32a-f which in turn provides a shorter co-extension of the flaps 32a-f with the protruding structure 21 into the through-going hole 11. However, it may be noted that the central cut-out 31g, if present, preferably has a cross-sectional dimension being smaller than the corresponding cross-sectional of the protruding structure 21 such that the flaps 32a-f will be pushed inwardly into the through-going hole 11 a distance from the mouth 11 a in the first direction A.

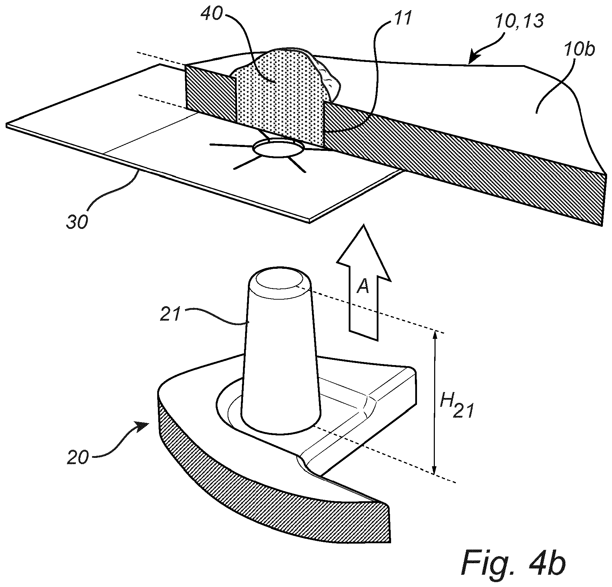

With reference to figure 3b and figure 4a, the piece of flexible sheet 30 may have an adhesive side 30c configured to face the first side 10a of the light source or sensor board arrangement 10. The adhesive side 30c is used to attach the piece of flexible sheet 30 to the light source or sensor board arrangement 10. The adhesive side 30c is preferably strong enough to carry the weight of the flexible sheet 30 as such and is preferably also strong enough to carry the weight of the curable liquid adhesive 40 as when the curable liquid adhesive 40 has been applied as indicated in figure 4b.

The piece of flexible sheet 30 may have a non-adhesive side 30d, the side opposite the adhesive side 30c, configured to face away from the light source or sensor board arrangement 10. This makes handling and attachment of the flexible sheet 30 to the light source or sensor board arrangement 10 easier. Moreover, unintentionally picking up of dirt is counteracted. This latter is especially advantageous in case the sensor and the flexible sheet 30 is attached to the same side of the light source or sensor board arrangement 10, which is e.g. the case in the embodiment shown in figures 1 and 2, where the image sensor is attached to the sensor board 13 on the side 10a facing the optics unit 25.

The piece of flexible sheet 30 may also, as seen in the plane of the flexible sheet 30, comprise one portion 30a having the above discussed adhesive side 30c and non-adhesive side 30d and one portion 30b being non-adhesive on both sides. This part 30b being non-adhesive on both sides may be used as a handle. Such a handle may e.g. be useful when attaching the flexible sheet 30 to the light source or sensor board arrangement 10.

The flexible sheet 30 preferably has a bending resistance such that the flaps 32a-f are capable of carrying their own weight and thereby extend across the mouth 11a of the through-going opening 11, as shown in figure 4a, also before the protruding structure 21 of the base unit 20 is inserted into the through-going hole 11. The bending resistance is preferably such that the flaps 32a-f are also capable of carrying the weight of the curably, liquid adhesive 40 applied in the cup formed by the through-going hole 11 and the flexible sheet 30 extending across the mouth 11 a of the through-going hole 11, as shown in figure 4b, also before the protruding structure 21 of the base unit 20 is inserted into the through-going hole 11. The bending resistance is determined by the material properties in combination with the material thickness t₃₀ of the flexible sheet 30.

As indicated in figure 4b, a curable liquid adhesive 40 is applied from a second side 10b of the light source or sensor board arrangement 10, the second side 10b being opposite to the first side 10a and being configured to face away from the base unit 20 when the light source or sensor board arrangement 10 is attached to the base unit 20. The curable liquid adhesive 40 is applied into the cup formed by the through-going hole 11 and the piece of flexible sheet 30 extending across the mouth 11 a of the through-going hole 11 on the first side 10a of the light source or sensor board arrangement 10. The curable liquid adhesive 40 is a viscous liquid, such that it does not flow through the cuts 31 a-g for a time period being sufficient for the light source or sensor board arrangement 10 to be moved relative to the base unit 25 to insert the protruding structure 21 of the base unit 20 into the through-going hole 11.

Thereafter, as indicated in figure 4c, the light source or sensor board arrangement 10 is moved relative to the base unit 20 such that the protruding structure 21 of the base unit 20 is inserted along a first direction A through the part 30a of the piece of flexible sheet 30 extending across the mouth 11 a and into the through-going hole 11. Free ends of the flaps 32a-f are thereby pushed by the protruding structure 21 in the first direction A into the through-going hole 11.

When the position in figure 4c has been reached, the light source or sensor board arrangement 10 is aligned relative to the base unit 20. The alignment may include translational and/or rotational movement along the plane of the light source or sensor board arrangement 10, translational movement along the normal to the plane of the light source or sensor board arrangement 10, and/or a tilting of the plane of the light source or sensor board arrangement 10 relative to the base unit 20.

After the correct alignment has been achieved, the curable liquid adhesive 40 is cured such that the aligned relative position between the light source or sensor board arrangement 10 and the base unit 20 becomes fixed.

As best shown in figure 4c, the radial extension of the flaps 32a-f may be related to a thickness t₁₀ of the light source or sensor board arrangement 10 such that, as the protruding structure 21 of the base unit 20 is inserted into the through-going hole 11 and the free ends of the flaps 32a-f are pushed by the protruding structure 21 in the first direction A into the through-going hole 11, the free, radially inwardly facing ends of the flaps 32a-f remain within the through-going hole 11 as seen along the thickness t₁₀ of the light source or sensor board arrangement 10. The radial extension of the flaps 32a-f is preferably related to the thickness t₁₀ of the light source or sensor board arrangement 10 such that, as the protruding structure 21 of the base unit 20 is inserted into the through-going hole 11 and the free ends of the flaps 32a-f are pushed by the protruding structure 21 in the first direction A into the through-going hole 11, a sub-portion 22" of a portion 22' of an outer envelope surface 22 of the protruding structure 21 residing inside the through-going hole 11 is left exposed such that the sub-portion 22" may be adhesively connected directly to a corresponding, oppositely arranged portion 11" of an inner envelope surface 11' of the through-going hole 11. The sub-portion 22" of the outer envelope surface 22 constitutes preferably at least 25% of the portion 22' of the outer envelope surface 22 of the protruding structure 21 residing inside the through-going hole 11. The at least 25% of the portion 22' is preferably measured as a distance along the first direction A. For a light source or sensor board arrangement 10 having a uniform thickness around the through-going hole 11, the portion 22' will have an extension along the first direction A being equal to the thickness of the light source or sensor board arrangement 10 and a sub-portion 22" constituting e.g. 25% will thereby have an extension along the first direction being 25% of the thickness of the light source or sensor board arrangement 10. However, it may be noted that if the cuts instead of being shaped as lines e.g. are shaped as wedges with their respective base towards the center point and their sharper part pointing radially outwardly, it may be conceivable to have no, or at least almost no, distance forming said sub-portion, since there will be formed a plurality of wedge shaped exposed surfaces 22". Thus, the feature that the sub-portion 22" of the outer envelope surface 22 constitutes preferably at least 25% of the portion 22' of the outer envelope surface 22 of the protruding structure 21 residing inside the through-going hole 11 may relate to that the total surface of the exposed parts 22" are at least 25% in relation to the total surface area of the portion 22' of the outer envelope surface 22 of the protruding structure 21 residing inside the through-going hole 11. However, the provision of a distance along the first direction of an exposed part 22" extending fully around the protruding structure 21 in the circumferential direction is advantageous, since it will form an unbroken bridge of cured adhesive around the protruding structure 21, and since it will facilitate redistribution of the liquid adhesive 40 during the alignment process. As shown in figure 4c, it may be noted that the corresponding, oppositely arranged portion 11" of the inner envelope surface 11' of the through-going hole 11 may be said to extend from a mouth 11b of the through-going hole 11 at the second side 10b a distance, such as indicated by the distance 22", into the through-going hole 11 along a second direction B being opposite to the first direction A. It may be noted that in figure 4c, the upper arrow, which indicates one of the ends of the distance 22", connects to the curved dashed line denoting the extension of the mouth 11 b along the outer envelope surface 22 of the protruding structure 21. Further, the lower arrow, which indicates the other end of the distance 22", connects to the upper end of the flaps 32a-f.

As indicated in figure 4b, the protruding structure 21 protrudes a distance H₂₁, as seen along the first direction A, from the base unit 20.

As indicated in figure 4a, the light source or sensor board arrangement 10 has around the through-going opening 11 a material thickness t₁₀.

As is best shown in figures 4c-d, the distance H₂₁ is preferably larger than the material thickness t₁₀ such that the protruding structure 21 extends completely through the through-going hole 11, and more preferably extends a distance past the second side 10b of the light source or sensor board arrangement 10. This makes efficient use of the available material thickness t₁₀ of the light source or sensor board arrangement 10. It also increases the contact area between the protruding structure 21 and the adhesive 40, thus increasing the fixation force of the adhesive 40 when cured. This is especially advantageous for cases when the material thickness t₁₀ of the light source or sensor board arrangement 10 is relatively thin, such as in the order of 1mm. As shown in figure 4c, the curable liquid adhesive 40 may in a sense be said to form an inverted cup on the part of the protruding structure 21 extending a distance past the second side 10b and attach this part extending past the second side 10b to the second side 10b immediately around the mouth 11b of the through-going hole 11 on the second side 10b.

The curable adhesive 40 is preferably light curable, more preferably UV-light curable.

As shown in figure 4d, the method may further include exposing the curable liquid adhesive to light 50, preferably UV-light, from the second side 10b. By exposing the curable liquid adhesive 40 to light, preferably UV-light, from the second side 10b, the risk of shadowed areas appearing is minimized.

As mentioned above, base unit 20 may be provided with a plurality of protruding structures 21 and the light source or sensor board arrangement 10 may be provided with a plurality of through-going holes 11, wherein each through-going hole 11 is configured to receive a respective one of the protruding structures 21. In such a design the action of providing a piece of a flexible sheet 30 on a first side 10a of the light source or sensor board arrangement 10 configured to face the base unit 20 may include providing a plurality of pieces of the flexible sheet 30 each covering one or more mouths 11 a of a plurality of through-going holes 11, and preferably the action includes providing a plurality of pieces of the flexible sheet 30 with each piece covering the mouth 11 a of a respective through-going hole 11.

When the above described method has been performed, there is provided an assembly comprising a light source or sensor board arrangement 10 attached to a base unit 20. The assembly may e.g. be the assembly shown in figure 2, which comprises a sensor board 13 attached to an optics unit 25, with an image sensor attached to the sensor board 13 on the side 10a of the sensor board 13 facing the optics unit 25.

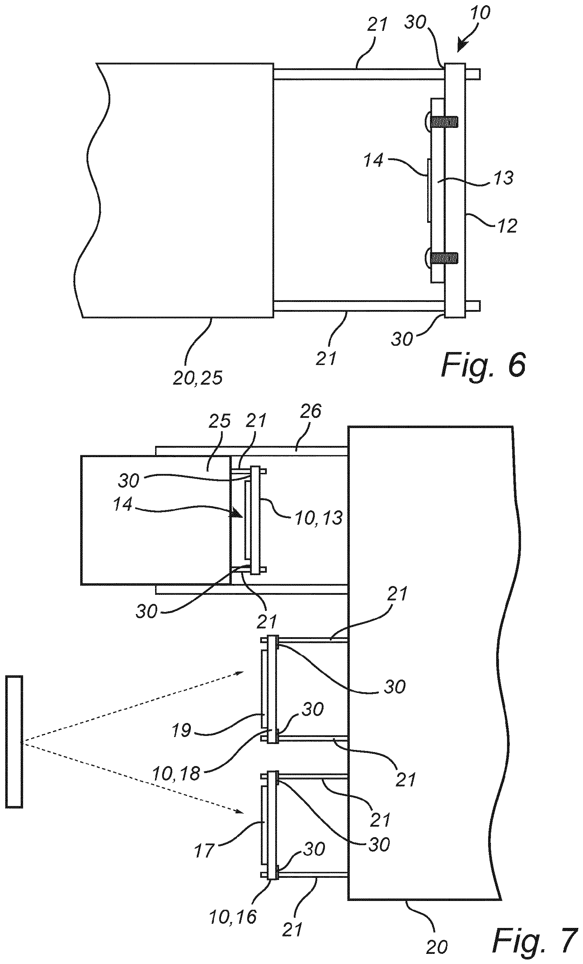

In figure 6, there is disclosed how a light source board or the sensor board 13 may be attached to a support board or intermediate board 12 which in turn is attached to the base unit 20. It may be said that the light source or sensor board arrangement 10 comprises a light source or sensor board 13 and a support board 12. The support board 12 may also be referred to as an intermediate board 12. The light source or sensor board 13 may e.g. be screwed to the intermediate board 12. In this design, the intermediate board 12 is the board being provided with the through-going holes 11 and the piece of flexible sheet 30 is positioned on the side of the intermediate board 12 facing the base unit 20. In the alignment process discussed above, the light source or sensor board 13 will be aligned by moving the intermediate board 12 relative to the protruding structures 21. In the embodiment shown in figure 6, a sensor board 13 is attached to the side of the intermediate board 12 facing the base unit 20 and an image sensor 14 is in turn attached to the sensor board 13 on the side of the sensor board 13 facing the base unit 20. This configuration is e.g. applicable for a case where the sensor 14 is an image sensor and the base unit 20 is an optics unit 25. The concept with an intermediate board 12 may also be useful for a light source board, such as a laser. In such a case the board indicated with reference numeral 13 and the light source is typically located on the side of the intermediate board 12 facing away from the base unit 20. This is in a sense shown in figure 7, but in an embodiment where there is a light source board 16 connected directly to the protruding structures 21 of the base unit 20, without any intermediate board 12.

In figure 7, there is disclosed camera device comprising a light source 17 connected to a light source board 16. Thus, the light source or sensor board arrangement 10 is in this case a light source board 16. The light source 17 may e.g. be a laser. In this design, the light source board 16 is the board being provided with the through-going holes 11 and the piece of flexible sheet 30 is positioned on the side of the light source board 16 facing the base unit 20. In the alignment process discussed above, the light source board 16 will be aligned by moving the light source board 16 relative to the protruding structures 21.

In figure 7, there is disclosed that the camera device comprises a sensor 19 connected to a sensor board 18. Thus, the light source or sensor board arrangement 10 is in this case a sensor board 18. The sensor 19 may be configured to detect a laser light reflected from a target in a scene monitored by the camera device. In this design, the sensor board 18 is the board being provided with the through-going holes 11 and the piece of flexible sheet 30 is positioned on the side of the sensor board 18 facing the base unit 20. In the alignment process discussed above, the sensor board 18 will be aligned by moving the sensor board 18 relative to the protruding structures 21.

It may be noted that when a component, such as sensor board 18, is aligned and fixated relative to the base unit 20, it will indirectly also be aligned with other components, such as the optics unit 25 that are aligned and fixated relative to the base unit 20.

A set-up with a laser light source 17 and a sensor 19 capable of detecting laser light may be used to determine a distance to a target.

In the embodiment shown in figure 7, there may also be a set-up with a sensor board 10 connected to an optics unit 25. This set-up may e.g. be of the kind discussed in detail above. The light sensor 14 is, as is also the case in the embodiment of figures 1-2, positioned on the side of the sensor board 10 facing the optics unit 25. The optics unit 25 is connected to the base unit 20 as indicated by component 26 in figure 7. The component 26 may be a separate component 26, such as brackets or the like. The component 26 may form part of a housing of the optics unit 25. The base unit 20 and the optics unit 25 may form a joint component with the component 26 also forming part of this joint component. This joint component may e.g. be a housing of the optics unit 25 with the optics unit 25 supporting the sensor board 13 and the housing of the optics unit 25 supporting the light source board 16 and the sensor board 18.

In this context it may be noted that through-out the description, the term base unit 20 may refer to a component having the properties of being provided with protruding structures 21 and being capable of supporting different components, and the term optics unit 25 refer to a component having the properties of being provided with protruding structures 21, being capable of supporting different components, and being capable of directing light to a light sensor 14. It may be noted that in many cases, an optics unit 25 may also act as a base unit 20.

Even though it is preferred that the method of attaching a light source or sensor board arrangement to a base unit is performed in accordance with the disclosure in the detailed disclosure of preferred embodiments and the appended drawings, it should be noted that a specific preferred embodiment of a specific action does not necessarily have to be combined with a specific embodiment of another action.

Even though it is preferred that the light source or sensor board arrangement and/or the base unit is designed in accordance with the disclosure in the detailed disclosure of preferred embodiments and the appended drawings, it should be noted that a specific preferred embodiment of a specific component does not necessarily have to be combined with a specific embodiment of another component.

Thus, advantages associated with a specific embodiment, including one or more features, of a specific action or component may be accomplished even though the other actions or component are designed in accordance with a more general disclosure, such as a disclosure provided in any of the claims or as provided under the summary of the invention, or as disclosed as one feature among many features in the detailed description, rather than being defined in accordance with the specific embodiment including all features disclosed in the detailed description.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

For instance, the shape of the cuts 31 a-g and the distribution of the cuts 31 a-g may be different from the disclosed embodiment comprising a plurality of radial cuts 31 a-f and a central cut-out 31g. The configuration of the cuts is in part dependent upon the design of the protruding structure 21. For instance, if the protruding structure is an elongated ridge, the cuts may e.g. be two cuts being positioned at a distance from each other but extending along a single line such that there will be formed at least one wide flap on each long side of the ridge. There may also be additional cuts dividing respective wide flap into a plurality of more narrow flaps.

## Claims

1. Method of attaching a light source or sensor board arrangement (10) to a base unit (20), wherein the base unit (20) is provided with a protruding structure (21) and the light source or sensor board arrangement (10) is provided with a through-going hole (11), wherein the through-going hole (11) is configured to receive the protruding structure (21), wherein the method comprises:
providing a piece of a flexible sheet (30) on a first side (10a) of the light source or sensor board arrangement (10) configured to face the base unit (20) when the light source or sensor board arrangement (10) is attached to the base unit (20), such that the piece of flexible sheet (30) extends across a mouth (11a) of the through-going hole (11), wherein the piece of flexible sheet (30) is provided with cuts or perforations (31a-g) dividing a part (30a) of the piece of flexible sheet (30) extending across the mouth (10a) into flaps (32a-f), and wherein the cuts (31a-g) include a central cut-out (31g),
applying a curable liquid adhesive (40) from a second side (10b) of the light source or sensor board arrangement (10), the second side (10b) being opposite to the first side (10a) and being configured to face away from the base unit (20) when the light source or sensor board arrangement (10) is attached to the base unit (20), and into the through-going hole (11),
moving the light source or sensor board arrangement (10) relative to the base unit (20) such that the protruding structure (21) of the base unit (20) is inserted along a first direction (A) through the part (30a) of the piece of flexible sheet (30) extending across the mouth (11a) and into the through-going hole (11) such that free ends of the flaps (32a-f) are pushed by the protruding structure (21) in the first direction (A) into the through-going hole (11),
aligning the light source or sensor board arrangement (10) relative to the base unit (20), and
curing the curable liquid adhesive (40).

2. Method according to claim 1, wherein the cuts (31a-g) include a plurality of cuts (31a-f) having an at least partly radial extension.

3. Method according to any one of claims 1-2 wherein a radial extension of the flaps (32a-f) is related to a thickness (t₁₀) of the light source or sensor board arrangement (10) such that, as the protruding structure (21) of the base unit (20) is inserted into the through-going hole (11) and the free ends of the flaps (32a-f) are pushed by the protruding structure (21) in the first direction (A) into the through-going hole (11), the free ends of the flaps (32a-f) remain within the through-going hole (11) as seen along the thickness (t₁₀) of the light source or sensor board arrangement (10).

4. Method according to claim 3, wherein the radial extension of the flaps (32a-f) is related to the thickness (t₁₀) of the light source or sensor board arrangement (10) such that, as the protruding structure (21) of the base unit (20) is inserted into the through-going hole (11) and the free ends of the flaps (32a-f) are pushed by the protruding structure (21) in the first direction (A) into the through-going hole (11), a sub-portion (22") of a portion (22') of an outer envelope surface (22) of the protruding structure (21) residing inside the through-going hole (11) is left exposed such that the sub-portion (22") may be adhesively connected directly to a corresponding, oppositely arranged portion (11") of an inner envelope surface (11') of the through-going hole (11).

5. Method according to claim 4, wherein the sub-portion (22") of the outer envelope surface (22) constitutes at least 25% of the portion (22') of the outer envelope surface (22) of the protruding structure (21) residing inside the through-going hole (11).

6. Method according to claim 4 or 5, wherein the corresponding, oppositely arranged portion (11") of the inner envelope surface (11') of the through-going hole (11) extends from a mouth (11b) of the through-going hole (11) at the second side (10b) a distance into the through-going hole (11) along a second direction (B) being opposite to the first direction (A).

7. Method according to any one of claims 1-6, wherein the piece of flexible sheet (30) has an adhesive side (30c) configured to face the first side (10a) of the light source or sensor board arrangement (10).

8. Method according to any one of claims 1-7 wherein the piece of flexible sheet (30) has a non-adhesive side (30d) configured to face away from the light source or sensor board arrangement (10).

9. Method according to any one of claims 1-8, wherein the flexible sheet (30) has a bending resistance such that the flaps (32a-f) are capable of carrying their own weight and thereby extend across the mouth (11a) of the through-going opening (11) until the protruding structure (21) of the base unit (20) is inserted into the through-going hole (11).

10. Method according to any one of claims 1-9, wherein the protruding structure (21) protrudes a distance (H₂₁), as seen along the first direction (A), from the base unit (20), and wherein the light source or sensor board arrangement (10) has around the through-going opening (11) a material thickness (t₁₀), wherein the distance (H₂₁) is larger than the material thickness (t₁₀) such that the protruding structure (21) extends completely through the through-going hole (11), and preferably extends a distance past the second side (10b) of the light source or sensor board arrangement (10).

11. Method according to any one of claims 1-10, wherein the curable adhesive (40) is light curable, preferably UV-light curable.

12. Method according to claim 11, wherein the curable liquid adhesive is exposed to light (50), preferably UV-light, from the second side (10b).

13. Method according to any one of claims 1-12, wherein the action of providing a piece of a flexible sheet (30) on a first side (10a) of the light source or sensor board arrangement (10) configured to face the base unit (20) includes providing a plurality of pieces of the flexible sheet (30) each covering one or more mouths (11a) of a plurality of through-going holes (11), and preferably includes providing a plurality of pieces of the flexible sheet (30) with each piece covering the mouth (11a) of a respective through-going hole (11).

14. The method according to any one of claims 1-13, wherein the base unit (20) is an optics unit (25).

15. Assembly comprising a light source or sensor board arrangement (10) attached to a base unit (20) in accordance with a method according to any one of claims 1-14.

## Patentansprüche

1. Verfahren zum Anbringen einer Lichtquelle oder einer Sensorplatinenanordnung (10) an einer Basiseinheit (20), wobei die Basiseinheit (20) mit einer hervorstehenden Struktur (21) versehen ist und die Lichtquelle oder Sensorplatinenanordnung (10) mit einer durchgehenden Öffnung (11) versehen ist, wobei die durchgehende Öffnung (11) dafür gestaltet ist, die hervorstehende Struktur (21) aufzunehmen, wobei das Verfahren Folgendes umfasst:
Bereitstellen eines Stücks einer flexiblen Bahn (30) an einer ersten Seite (10a) der Lichtquelle oder Sensorplatinenanordnung (10), das dafür gestaltet ist, zur Basiseinheit (20) zu weisen, wenn die Lichtquelle oder Sensorplatinenanordnung (10) an der Basiseinheit (20) angebracht ist, so dass sich das Stück einer flexiblen Bahn (30) über eine Mündung (11a) der durchgehenden Öffnung (11) erstreckt, wobei das Stück einer flexiblen Bahn (30) mit Einschnitten oder Perforationen (31a-g) versehen ist, die einen Teil (30a) des Stücks einer flexiblen Bahn (30), das sich über die Mündung (10a) erstreckt, in Laschen (32a-f) teilen, und wobei die Einschnitte (31a-g) einen mittigen Ausschnitt (31g) beinhalten,
Einbringen eines härtbaren flüssigen Haftstoffs (40) von einer zweiten Seite (10b) der Lichtquelle oder einer Sensorplatinenanordnung (10) aus in die durchgehenden Öffnung (11), wobei die zweite Seite (10b) der ersten Seite (10a) gegenüberliegt und dafür gestaltet ist, von der Basiseinheit (20) weg zu weisen, wenn die Lichtquelle oder Sensorplatinenanordnung (10) an der Basiseinheit (20) angebracht ist,
Bewegen der Lichtquelle oder Sensorplatinenanordnung (10) relativ zur Basiseinheit (20) derart, dass die hervorstehende Struktur (21) der Basiseinheit (20) entlang einer ersten Richtung (A) durch den Teil (30a) des Stücks einer flexiblen Bahn (30), das sich über die Mündung (11a) erstreckt, hindurch derart in die durchgehende Öffnung (11) eingesetzt wird, dass freie Enden der Laschen (32a-f) von der hervorstehenden Struktur (21) in der ersten Richtung (A) in die durchgehende Öffnung (11) gedrückt werden,
Ausrichten der Lichtquelle oder Sensorplatinenanordnung (10) relativ zur Basiseinheit (20) und
Härten des härtbaren flüssigen Haftstoffs (40).

2. Verfahren nach Anspruch 1, wobei die Einschnitte (31a-g) mehrere Einschnitte (31a-f) beinhalten, die eine zumindest teilweise radiale Erstreckung aufweisen.

3. Verfahren nach einem der Ansprüche 1 bis 2, wobei eine radiale Erstreckung der Laschen (32a-f) mit einer Dicke (t₁₀) der Lichtquelle oder Sensorplatinenanordnung (10) in Beziehung steht, so dass, wenn die hervorstehende Struktur (21) der Basiseinheit (20) in die durchgehende Öffnung (11) eingesetzt wird und die freien Enden der Laschen (32a-f) von der hervorstehenden Struktur (21) in der ersten Richtung (A) in die durchgehende Öffnung (11) gedrückt werden, die freien Enden der Laschen (32a-f), betrachtet entlang der Dicke (t₁₀) der Lichtquelle oder Sensorplatinenanordnung (10), in der durchgehenden Öffnung (11) bleiben.

4. Verfahren nach Anspruch 3, wobei die radiale Erstreckung der Laschen (32a-f) mit der Dicke (t₁₀) der Lichtquelle oder Sensorplatinenanordnung (10) in Beziehung steht, so dass, wenn die hervorstehende Struktur (21) der Basiseinheit (20) in die durchgehende Öffnung (11) eingesetzt wird und die freien Enden der Laschen (32a-f) von der hervorstehenden Struktur (21) in der ersten Richtung (A) in die durchgehende Öffnung (11) gedrückt werden, ein Teilabschnitt (22") eines Abschnitts (22') einer äußeren Hüllenoberfläche (22) der hervorstehenden Struktur (21), die in der durchgehenden Öffnung (11) sitzt, freigelassen wird, so dass der Teilabschnitt (22") haftend direkt mit einem entsprechenden gegenüber angeordneten Abschnitt (11") einer inneren Hüllenoberfläche (11') der durchgehenden Öffnung (11) verbunden werden kann.

5. Verfahren nach Anspruch 4, wobei der Teilabschnitt (22") der äußeren Hüllenoberfläche (22) mindestens 25 % des Abschnitts (22') der äußeren Hüllenoberfläche (22) der hervorstehenden Struktur (21) ausmacht, die in der durchgehenden Öffnung (11) sitzt.

6. Verfahren nach Anspruch 4 oder 5, wobei sich der entsprechende gegenüber angeordnete Abschnitt (11") der inneren Hüllenoberfläche (11') der durchgehenden Öffnung (11) von einer Mündung (11b) der durchgehenden Öffnung (11) an der zweiten Seite (10b) entlang einer zweiten Richtung (B), die der ersten Richtung (A) entgegengesetzt ist, über eine Strecke in die durchgehende Öffnung (11) erstreckt.

7. Verfahren nach einem der Ansprüche 1 bis 6, wobei das Stück einer flexiblen Bahn (30) eine haftende Seite (30c) aufweist, die dafür gestaltet ist, zur ersten Seite (10a) der Lichtquelle oder Sensorplatinenanordnung (10) zu weisen.

8. Verfahren nach einem der Ansprüche 1 bis 7, wobei das Stück einer flexiblen Bahn (30) eine nicht haftende Seite (30d) aufweist, die dafür gestaltet ist, von der Lichtquelle oder Sensorplatinenanordnung (10) weg zu weisen.

9. Verfahren nach einem der Ansprüche 1 bis 8, wobei die flexible Bahn (30) eine Biegefestigkeit aufweist, so dass die Laschen (32a-f) in der Lage sind, ihr eigenes Gewicht zu tragen und sich dadurch über die Mündung (11a) der durchgehenden Öffnung (11) zu erstrecken, bis die hervorstehende Struktur (21) der Basiseinheit (20) in die durchgehende Öffnung (11) eingesetzt wird.

10. Verfahren nach einem der Ansprüche 1 bis 9, wobei die hervorstehende Struktur (21), betrachtet entlang der ersten Richtung (A), von der Basiseinheit (20) über eine Strecke (H₂₁) hervorsteht und wobei die Lichtquelle oder Sensorplatinenanordnung (10) rings um die durchgehende Öffnung (11) eine Materialdicke (t₁₀) aufweist, wobei die Strecke (H₂₁) größer als die Materialdicke (t₁₀) ist, so dass sich die hervorstehende Struktur (21) vollständig durch die durchgehende Öffnung (11) erstreckt und sich vorzugsweise eine Strecke über die zweite Seite (10b) der Lichtquelle oder Sensorplatinenanordnung (10) hinaus erstreckt.

11. Verfahren nach einem der Ansprüche 1 bis 10, wobei der härtbare Haftstoff (40) lichthärtend ist, vorzugsweise UV-lichthärtend.

12. Verfahren nach Anspruch 11, wobei der härtbare flüssige Haftstoff von der zweiten Seite (10b) aus Licht (50) ausgesetzt wird, vorzugsweise UV-Licht.

13. Verfahren nach einem der Ansprüche 1 bis 12, wobei der Vorgang des Bereitstellens eines Stücks einer flexiblen Bahn (30) an einer ersten Seite (10a) der Lichtquelle oder Sensorplatinenanordnung (10), die dafür gestaltet ist, zur Basiseinheit (20) zu weisen, das Bereitstellen mehrerer Stücke einer flexiblen Bahn (30) beinhaltet, die jeweils eine oder mehrere Mündungen (11a) mehrerer durchgehender Öffnungen (11) bedecken, und vorzugsweise das Bereitstellen mehrerer Stücke einer flexiblen Bahn (30) beinhaltet, wobei jedes Stück die Mündung (11a) einer entsprechenden durchgehenden Öffnung (11) bedeckt.

14. Verfahren nach einem der Ansprüche 1 bis 13, wobei die Basiseinheit (20) eine optische Einheit (25) umfasst.

15. Anordnung, umfassend eine Lichtquelle oder Sensorplatinenanordnung (10), die gemäß einem Verfahren nach einem der Ansprüche 1 bis 14 an einer Basiseinheit (20) angebracht worden ist.

## Revendications

1. Procédé de fixation d'une source de lumière ou d'un agencement de carte de capteur (10) sur une unité de base (20), l'unité de base (20) étant pourvue d'une structure saillante (21) et la source de lumière ou l'agencement de carte de capteur (10) étant pourvu d'un trou traversant (11), le trou traversant (11) étant conçu pour recevoir la structure saillante (21), ce procédé comprenant :
la prévision d'un morceau de feuille flexible (30) sur une première face (10a) de la source de lumière ou de l'agencement de carte de capteur (10), conçu pour être tourné vers l'unité de base (20) lorsque la source de lumière ou l'agencement de carte de capteur (10) est fixé à l'unité de base (20), de sorte que le morceau de feuille flexible (30) s'étend à travers une embouchure (11a) du trou traversant (11), le morceau de feuille flexible (30) étant pourvu de découpes ou de perforations (31a-g) divisant une partie (30a) du morceau de feuille flexible (30) s'étendant en travers de l'embouchure (10a) en volets (32a-f), et les découpes (31a-g) incluant une découpe centrale (31g),
l'application d'un adhésif liquide durcissable (40) depuis une seconde face (10b) de la source de lumière ou de l'agencement de carte de capteur (10), la seconde face (10b) étant opposée à la première face (10a) et étant conçue pour être détournée de l'unité de base (20) lorsque la source de lumière ou l'agencement de carte de capteur (10) est fixé à l'unité de base (20), et dans le trou traversant (11),
le déplacement de la source de lumière ou de l'agencement de carte de capteur (10) par rapport à l'unité de base (20) de manière à ce que la structure saillante (21) de l'unité de base (20) soit insérée dans un premier sens (A) à travers la partie (30a) du morceau de feuille flexible (30) s'étendant en travers de l'embouchure (11a) et dans le trou traversant (11) de manière à ce que les extrémités libres des volets (32a-f) soient poussées par la structure saillante (21) dans le premier sens (A) dans le trou traversant (11),
l'alignement de la source de lumière ou de l'agencement de carte de capteur (10) par rapport à l'unité de base (20), et
le durcissement de l'adhésif liquide durcissable (40).

2. Procédé selon la revendication 1, dans lequel les découpes (31a-g) incluent une pluralité de découpes (31a-f) ayant une extension au moins partiellement radiale.

3. Procédé selon l'une quelconque des revendications 1 et 2, dans lequel une extension radiale des volets (32a-f) est en relation avec une épaisseur (t₁₀) de la source de lumière ou de l'agencement de carte de capteur (10), de sorte que, lorsque la structure saillante (21) de l'unité de base (20) est insérée dans le trou traversant (11) et que les extrémités libres des volets (32a-f) sont poussées par la structure saillante (21) dans le premier sens (A) dans le trou traversant (11), les extrémités libres des volets (32a-f) restent dans le trou traversant (11), vues dans le sens de l'épaisseur (t₁₀) de la source de lumière ou de l'agencement de carte de capteur (10).

4. Procédé selon la revendication 3, dans lequel l'extension radiale des volets (32a-f) est en relation avec l'épaisseur (t₁₀) de la source de lumière ou de l'agencement de carte de capteur (10), de sorte que, lorsque la structure saillante (21) de l'unité de base (20) est insérée dans le trou traversant (11) et que les extrémités libres des volets (32a-f) sont poussées par la structure saillante (21) dans le premier sens (A) dans le trou traversant (11), une sous-section (22") d'une section (22') d'une surface d'enveloppe extérieure (22) de la structure saillante (21) se trouvant à l'intérieur du trou traversant (11) est laissée exposée de manière à ce que la sous-section (22") puisse être connectée en collant directement à une section correspondante disposée à l'opposé (11") d'une surface d'enveloppe intérieure (11') du trou traversant (11).

5. Procédé selon la revendication 4, dans lequel la sous-section (22") de la surface d'enveloppe extérieure (22) constitue au moins 25 % de la section (22') de la surface d'enveloppe extérieure (22) de la structure saillante (21) se trouvant à l'intérieur du trou traversant (11).

6. Procédé selon la revendication 4 ou 5, dans lequel la section disposée à l'opposé (11") de la surface d'enveloppe intérieure (11') du trou traversant (11) s'étend depuis une embouchure (11b) du trou traversant (11) sur la seconde face (10b) sur une distance dans le trou traversant (11) dans un second sens (B) qui est opposé au premier sens (A).

7. Procédé selon l'une quelconque des revendications 1 à 6, dans lequel le morceau de feuille flexible (30) a une face adhésive (30c) conçue pour être tournée vers la première face (10a) de la source de lumière ou l'agencement de carte de capteur (10).

8. Procédé selon l'une quelconque des revendications 1 à 7, dans lequel le morceau de feuille flexible (30) a une face non adhésive (30d) conçue pour être détournée de la source de lumière ou de l'agencement de carte de capteur (10).

9. Procédé selon l'une quelconque des revendications 1 à 8, dans lequel la feuille flexible (30) a une résistance à la courbure telle que les volets (32a-f) sont capables de supporter leur propre poids et s'étendent ainsi à travers l'embouchure (11a) de l'ouverture traversante (11) jusqu'à ce que la structure saillante (21) de l'unité de base (20) soit insérée dans le trou traversant (11).

10. Procédé selon l'une quelconque des revendications 1 à 9, dans lequel la structure saillante (21) dépasse d'une distance (H₂₁), vue dans le premier sens (A), de l'unité de base (20), et la source de lumière ou l'agencement de carte de capteur (10) a, autour de l'ouverture traversante (11), une épaisseur de matériau (t₁₀), la distance (H₂₁) étant supérieure à l'épaisseur de matériau (t₁₀), de sorte que la structure saillante (21) s'étend complètement à travers le trou traversant (11), et s'étend de préférence sur une distance après la seconde face (10b) de la source de lumière ou de l'agencement de carte de capteur (10).

11. Procédé selon l'une quelconque des revendications 1 à 10, dans lequel l'adhésif durcissable (40) est durcissable à la lumière, de préférence durcissable à la lumière UV.

12. Procédé selon la revendication 11, dans lequel l'adhésif liquide durcissable est exposé à la lumière (50), de préférence de la lumière UV, depuis la seconde face (10b).

13. Procédé selon l'une quelconque des revendications 1 à 12, dans lequel l'action de prévision d'un morceau de feuille flexible (30) sur une première face (10a) de la source de lumière ou de l'agencement de carte de capteur (10) conçue pour être tournée vers l'unité de base (20) inclut la prévision d'une pluralité de morceaux de de feuille flexible (30) couvrant chacune une ou plusieurs embouchures (11a) d'une pluralité de trous traversants (11), et inclut de préférence la prévision d'une pluralité de morceaux de de feuille flexible (30), chaque pièce couvrant l'embouchure (11a) d'un trou traversant respectif (11).

14. Procédé selon l'une quelconque des revendications 1 à 13, dans lequel l'unité de base (20) est une unité optique (25).

15. Ensemble comprenant une la source de lumière ou un agencement de carte de capteur (10) fixé à une unité de base (20) conforme à un procédé selon l'une quelconque des revendications 1 à 14.
